# EUROPEAN PATENT APPLICATION

(11) **EP 4 660 452 A1**
(43) Date of publication of application: **10.12.2025**
(21) Application number: 24215891.3
(22) Date of filing: 27.11.2024
(51) Int. Cl.: F03D 13/25, B63B 77/10, F03D 13/40

(54) **METHOD AND SYSTEM FOR INSTALLING FLOATING OFFSHORE WIND GENERATOR USING SEMI-SUBMERSIBLE CRANE VESSEL**

(30) Priority: 05.06.2024 KR 20240073738
(71) Applicant: MOC CO. LTD., Asan-si, Chungcheongnam-do (KR)
(72) Inventor: KIM, Shin Hee, Cheonan-si (KR); KIM, Sung Hee, Cheonan-si (KR); KIM, Woo Kyeom, Cheonan-si (KR); KIM, Uik Kyeom, Cheonan-si (KR); KIM, Jin Kyeom, Cheonan-si (KR)
(74) Representative: Sander, Rolf

(57) **Abstract**

A method for installing a floating offshore wind generator using a semi-submersible crane vessel of the present disclosure includes loading an anchor, moving the semi-submersible crane vessel to a site, and installing the anchor at the site, by an anchor management section of the semi-submersible crane vessel, loading a hull and mooring the semi-submersible crane vessel to a quay wall, by a hull management section of the semi-submersible crane vessel, pre-assembling wind power equipment on the hull while the semi-submersible crane vessel is moored at the quay wall for a certain period of time, by a wind power equipment pre-assembly section of the semi-submersible crane vessel, towing the hull whose pre-assembly is complete from the quay wall to the site, and fixing the anchor and the hull by a mooring line, by a control section of the semi-submersible crane vessel, installing an offshore substation by an offshore substation installation section of the semi-submersible crane vessel, and installing a submarine cable by a submarine cable installation section of the semi-submersible crane vessel.

## Description

### TECHNICAL FIELD

The present disclosure relates to a method and system for installing a floating offshore wind generator using a semi-submersible crane vessel. Particularly, the present disclosure relates to a method and system for installing an offshore wind power generator using a semi-submersible crane vessel, which can simplify management by minimizing equipment required for each process by using a semi-submersible crane vessel, and can shorten the offshore work time by pre-assembling structures for each process on land.

### BACKGROUND

Unlike fixed offshore wind power, which installs a superstructure by fixing a pile structure to a seabed, floating offshore wind power installs a superstructure on a hull structure to generate electricity using wind power. Since the installed hull is fixed by a mooring line with an anchor, and a submarine cable inner network should always be floating on the water, the submarine cable should be stronger than a general submarine cables in terms of strength and durability such as torsion, and the number of wire manufacturers capable of producing the submarine cable is limited.

Hull models used in Korea are moved to the sea in a fully assembled state by high-power anchor handling tug supply vessel (AHTS) and installed in a wind farm. However, a towing period is long when moved by a high-power anchor handling tug supply vessel (AHTS), and the work of connecting anchor lines installed in advance on site takes a long time, so the construction risk is high. Currently, in Korea, there is no anchor handling tug supply vessel (AHTS) that can perform the work, so the anchor handling tug supply vessel (AHTS) should be fully leased from overseas. However, due to regulations such as cabotage, it is realistically difficult for foreign vessels to enter Korea and perform long-term work, which is a major problem for offshore wind power projects.

As the related art, there is Korean Patent No. 10-2200562 (marine transport means for floating wind generator). However, the above patent only provides a marine transport means for floating a wind generator that reduces the installation time of the wind generator and improves cost efficiency by moving the wind generator assembled on land to the sea where the wind generator will be installed using the marine transport means and then installing the wind generator, without assembling and installing the wind generator at sea.

### SUMMARY

An object of the present disclosure is to provide a method and system for installing a floating offshore wind generator using a semi-submersible crane vessel that can prevent excessive cost increases due to the mobilization and withdrawal of separate vessels for each process, solve complicated construction-related material transportation and logistics problems before and after installation, and enable bulk installation of large-scale wind generators using a bulk installation method.

According to an aspect of the present disclosure, there is provided a method for installing a floating offshore wind generator using a semi-submersible crane vessel, the method including: loading an anchor, moving the semi-submersible crane vessel to a site, and installing the anchor at the site, by an anchor management section of the semi-submersible crane vessel; loading a hull and mooring the semi-submersible crane vessel to a quay wall, by a hull management section of the semi-submersible crane vessel; pre-assembling wind power equipment on the hull while the semi-submersible crane vessel is moored at the quay wall for a certain period of time, by a wind power equipment pre-assembly section of the semi-submersible crane vessel; towing the hull whose pre-assembly is complete from the quay wall to the site, and fixing the anchor and the hull by a mooring line, by a control section of the semi-submersible crane vessel; installing an offshore substation by an offshore substation installation section of the semi-submersible crane vessel; and installing a submarine cable by a submarine cable installation section of the semi-submersible crane vessel.

According to another aspect of the present disclosure, there is provided a system for installing a floating offshore wind generator using a semi-submersible crane vessel, the system including: a semi-submersible crane vessel of a barge type in which a crane is installed; an auxiliary anchor handling tug supply vessel (AHTS) that tows a jacket and a submarine cable transport barge; and a submarine cable transport barge that loads a submarine cable inner network and a submarine cable outer network and is loaded on the semi-submersible crane vessel, in which the semi-submersible crane vessel includes an anchor management section that moves after loading an anchor and installs the anchor at the site, a hull management section that loads a hull and moors the semi-submersible crane vessel to a quay wall, a wind power equipment pre-assembly section that pre-assembles wind power equipment on the hull, a control section that tows the hull whose pre-assembly is complete from the quay wall to the site and fixes the anchor and the hull by a mooring line, an offshore substation installation section that installs an offshore substation, and a submarine cable installation section that installs a submarine cable.

### ADVANTAGEOUS EFFECTS

According to the present disclosure, a large number of anchors can be loaded onto a wide deck of the semi-submersible crane vessel at one time and then moved to be installed on the site.

In addition, a lower hull can be loaded onto the semi-submersible crane vessel, and the superstructure can be sequentially loaded and commissioned using the crane of the semi-submersible crane vessel.

In addition, the jacket can be installed using the semi-submersible crane vessel, and the offshore substation can be transported and installed on the jacket.

In addition, a submarine cable accessory barge can be loaded onto the semi-submersible crane vessel to simultaneously perform lying and burying construction on the cable.

### BRIEF DESCRIPTION OF THE DRAWINGS

Fig. 1 is a flow chart explaining a method for installing a floating offshore wind generator using a semi-submersible crane vessel according to one embodiment of the present disclosure.
Fig. 2 is a flow chart explaining a method for installing an offshore substation using the semi-submersible crane vessel according to one embodiment of the present disclosure.
Fig. 3 is a flow chart explaining a method for constructing a submarine cable using the semi-submersible crane vessel according to one embodiment of the present disclosure.
Fig. 4 is a configuration diagram of a system for installing a floating offshore wind generator using the semi-submersible crane vessel according to one embodiment of the present disclosure.
Figs. 5 and 6 are perspective and front views of the semi-submersible crane vessel according to one embodiment of the present disclosure.
Fig. 7 is a usage diagram illustrating a superstructure loaded onto the semi-submersible crane vessel according to one embodiment of the present disclosure.
Figs. 8A to 8C are diagrams illustrating the number of anchors that can be loaded onto a semi-submersible crane vessel according to the type of anchor according to one embodiment of the present disclosure.

### DETAILED DESCRIPTION

A specific structural or functional description of embodiments according to the concept of the present disclosure disclosed in the present specification is merely exemplified for the purpose of explaining embodiments according to the concept of the present disclosure, and embodiments according to the concept of the present disclosure may be implemented in various forms and are not limited to the embodiments described in the present specification.

Since embodiments according to the concept of the present disclosure may have various changes and may have various forms, embodiments are illustrated in the drawings and described in detail in the present specification. However, these are not intended to limit embodiments according to the concept of the present disclosure to specific disclosed forms, and include all modifications, equivalents, or substitutes included in the spirit and technical scope of the present disclosure.

The terms used in the present specification are only used to describe specific embodiments and are not intended to limit the present disclosure. The singular expression includes the plural expression unless the context clearly indicates otherwise. In the present specification, the terms "include", "have", or the like are intended to specify the presence of a feature, number, step, operation, component, part, or combination thereof described in the present specification, but should be understood as not excluding in advance the possibility of the presence or addition of one or more other features, numbers, steps, operations, components, parts, or combinations thereof.

Hereinafter, embodiments of the present disclosure will be described in detail with reference to the drawings attached to the present specification.

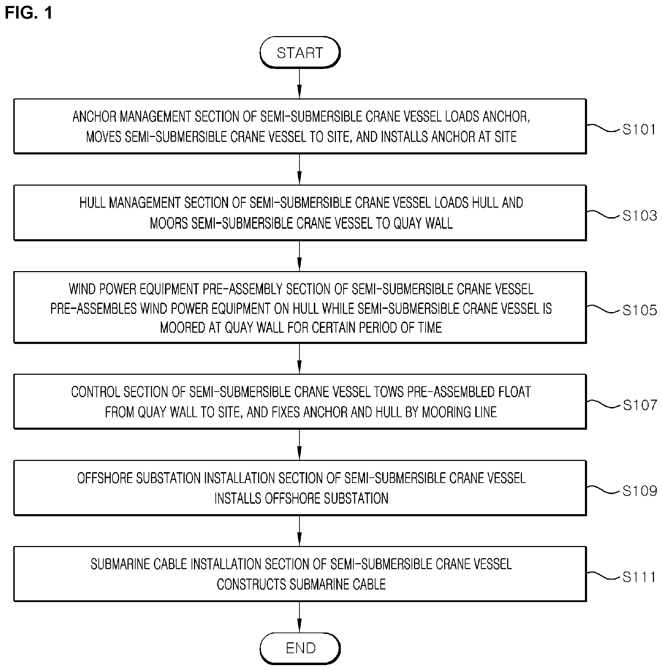

Fig. 1 is a flow chart explaining a method for installing a floating offshore wind generator using a semi-submersible crane vessel according to one embodiment of the present disclosure.

Referring to Fig. 1, an anchor management section 110 of a semi-submersible crane vessel 100 loads an anchor, moves the semi-submersible crane vessel 100 to the site, and installs the anchor at the site (S101). The site may mean a sea area with a water depth of 80 m or more, but is not necessarily limited thereto. A deck of the semi-submersible crane vessel 100 may be formed to a size of approximately 159.5 x 78 m, and unlike the conventional high-horsepower anchor handling tug supply (AHTS) vessel, the semi-submersible crane vessel 100 can load and move a much larger number of anchors at one time.

A hull management section 120 of the semi-submersible crane vessel 100 loads the hull and moors the semi-submersible crane vessel 100 to a quay wall (S103). The hull may be dried on land (quay wall) or in a dry dock. The hull management section 120 may control a crane 200 of the semi-submersible crane vessel 100 to eliminate restrictions on the height of a crane boom and perform work without the risk of sinking the hull. The semi-submersible crane vessel 100 is a vessel that can be submerged up to 26.5 m with a ballast tank capacity and has a semi-submersible function. Moreover, the semi-submersible crane vessel 100 is designed to be able to load an accessory vessel when submerged to about 19.5 m.

A wind power equipment pre-assembly section 130 of the semi-submersible crane vessel 100 pre-assembles the wind power equipment on the hull while the semi-submersible crane vessel 100 is moored at the quay wall for a certain period of time (S105). The wind power equipment may be at least one of a tower, a nacelle, a blade, and a cable, but is not necessarily limited thereto. In the related art, the hull is moored to the quay wall and a crane loading work is performed, but in the present disclosure, since the wind power equipment is assembled after the semi-submersible crane vessel 100 is moored to the quay wall, an engine including dynamic positioning (DP) function of the semi-submersible crane vessel 100 can be used to effectively control the movement due to external force (waves). In addition, since the vessel itself is moored to the quay wall, the work can be performed with the same effect as performing the crane loading work on land. Since the wind power equipment pre-assembly section 130 assembles the wind power equipment to the hull loaded on the semi-submersible crane vessel 100, the pre-assembled hull, that is, a floating wind turbine generator (FWTG), maintains the loaded state without being loaded separately on the semi-submersible crane vessel 100.

A control section 170 of the semi-submersible crane vessel 100 tows the pre-assembled float from the quay wall to the site, and fixes the anchor and the hull by a mooring line (S 107). In the case of towing the offshore wind turbine generator (FWTG) to the site using the conventional high-horsepower anchor handling tug supply vessel (AHTS), since three anchor handling tug supply vessels (AHTSs) are used for towing, the three anchor handling tug supply vessels (AHTSs) should not move to another place and should maintain the position of the offshore wind generator in order to connect six mooring lines to the ship body. In the present disclosure, the semi-submersible crane vessel 100 has the advantage of not requiring additional work time for mooring lines because the semi-submersible crane vessel 100 is launched after connecting pre-installed anchor lines before launching the offshore wind generator when the offshore wind generator arrives at the site.

An offshore substation installation section 140 of the semi-submersible crane vessel 100 installs an offshore substation (S109), and a submarine cable installation section 150 of the semi-submersible crane vessel 100 constructs the submarine cable (S111).

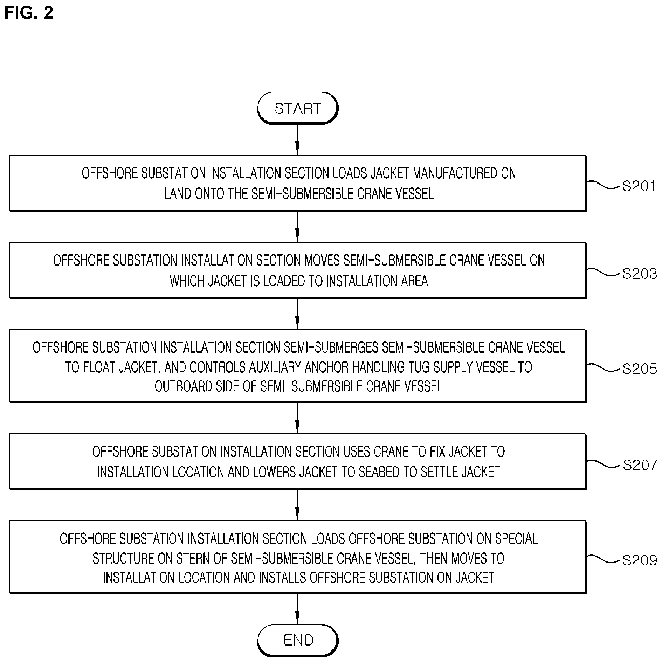

Fig. 2 is a flow chart explaining a method for installing the offshore substation by the semi-submersible crane vessel according to one embodiment of the present disclosure.

Referring to Fig. 2, the offshore substation installation section 140 loads a jacket manufactured on land onto the semi-submersible crane vessel 100 (S201). In this case, the semi-submersible crane vessel 100 has a special steel structure called a skid way, so that the offshore substation installation section 140 can load the jacket onto the semi-submersible crane vessel 100 by pulling the jacket over the skid way. The offshore substation installation section 140 can continuously adjust the ballast to match the height of the main deck of the semi-submersible crane vessel 100 when loading the jacket so that the height of the main deck is coincident with the quay wall.

The offshore substation installation section 140 moves the semi-submersible crane vessel on which the jacket is loaded to the installation area (S203). The offshore substation installation section 140 semi-submerges the semi-submersible crane vessel 100 to float the jacket, and controls an auxiliary anchor handling tug supply vessel (AHTS) 300 to move the jacket to the outboard side of the semi-submersible crane vessel 100 (S205). The offshore substation installation section 140 may control the crane 200 to lift the jacket that has been moved to the outboard side, and may adjust an air cock (diaphragm valve) from the bottom of the jacket and introduce ballast so that the jacket is upright. The offshore substation installation section 140 uses a crane to fix the jacket to the installation location and lowers the jacket to a seabed to settle the jacket (S207). The offshore substation installation section 140 loads the offshore substation on a special structure on a stern of the semi-submersible crane vessel 100, then moves to the installation location and installs the offshore substation on the jacket (S209).

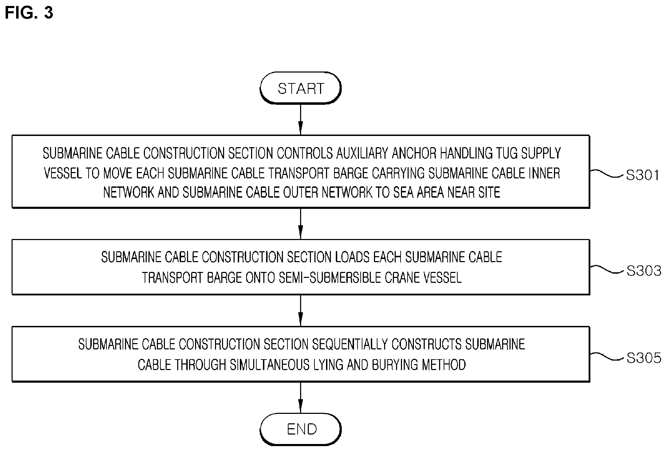

Fig. 3 is a flow chart explaining a method for constructing a submarine cable using a semi-submersible crane vessel according to one embodiment of the present disclosure.

Referring to Fig. 3, the submarine cable construction section 150 controls an auxiliary anchor handling tug supply vessel (AHTS) 300 to move each submarine cable transport barge 400 carrying a submarine cable inner network Arrya and a submarine cable outer network Export to the sea area near the site (S301). Each submarine cable transport barge 400 can load approximately 5,000 tons of submarine cables. The submarine cable construction section 150 loads each submarine cable transport barge 400 onto the semi-submersible crane vessel 100 (S303). The submarine cable construction section 150 sequentially constructs the submarine cable through a simultaneous lying and burying method using the Trenching Frame to a water depth of about 105 m (S305).

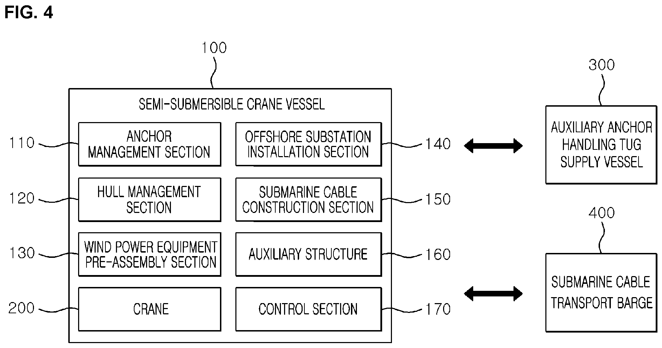

Fig. 4 is a configuration diagram of a system for installing a floating offshore wind generator using a semi-submersible crane vessel according to one embodiment of the present disclosure.

Referring to Fig. 4, the system 10 for installing the floating offshore wind generator using the semi-submersible crane vessel includes the semi-submersible crane vessel 100, the auxiliary anchor handling tug supply vessel (AHTS) 300, and the submarine cable transport barge 400.

The semi-submersible crane vessel 100 includes the anchor management section 110, the hull management section 120, the wind power equipment pre-assembly section 130, the offshore substation installation section 140, the submarine cable construction section 150, an auxiliary structure 160, the control section 170, and the crane 200.

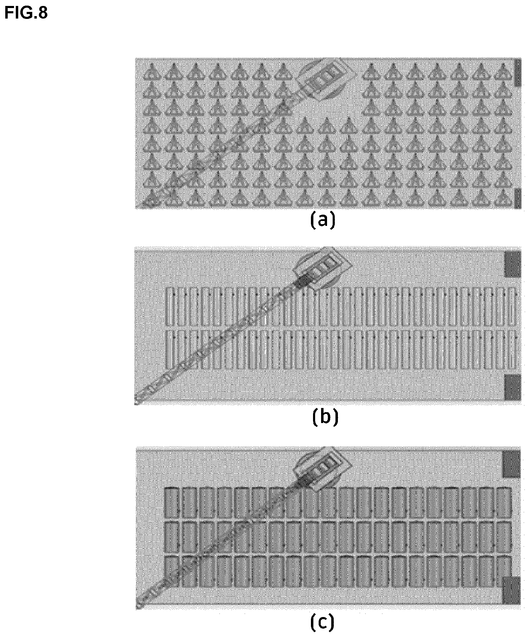

The anchor management section 110 may load the anchor onto the semi-submersible crane vessel 100, move the semi-submersible crane vessel 100 to a site, and install the anchor at the site. The site may mean a sea area with a water depth of 80 m or more, but is not necessarily limited thereto. The deck of the semi-submersible crane vessel 100 may be formed to a size of approximately 159.5 x 78 m, and unlike the conventional high-horsepower anchor handling tug supply (AHTS) vessel, the semi-submersible crane vessel 100 can load and move a much larger number of anchors at one time. Figs. 8A to 8C are diagrams illustrating the number of anchors that can be loaded on the semi-submersible crane vessel according to the type of the anchor according to one embodiment of the present disclosure. The types of anchors commonly used in the related art are a drag anchor, a driven pile, and a suction anchor. Referring to Fig. 8A, up to 127 drag anchors can be loaded at one time based on a 500 MW offshore complex, and thus all anchors can be transported in only 1.6 movements, thereby shortening the time. Referring to Fig. 8B, up to 60 driven piles can be loaded at one time based on a 500MW offshore complex, so that all anchors can be transported in only 3.3 moves, thereby shortening the time. Referring to Fig. 8C, up to 60 suction anchors can be loaded at one time based on a 500MW offshore complex, so that all anchors can be transported in only 3.3 moves, thereby shortening the time.

The hull management section 120 may load the hull onto the semi-submersible crane vessel 100, and then move the semi-submersible crane vessel 100 to moor the semi-submersible crane vessel 100 to the quay wall. The hull may be dried on land (quay wall) or in the dry dock. When the hull is constructed on land (quay wall), the hull management section 120 may moor the semi-submersible crane vessel 100 to the quay wall and control the ballast water to maintain the height of the quay wall and the height of the semi-submersible crane vessel 100 the same. The hull management section 120 may maintain the water level of the semi-submersible crane vessel 100 at a certain level according to a weight and tidal amplitude generated when the hull is loaded so that the hull can be completely loaded on the semi-submersible crane vessel 100. When the hull is constructed in the dry dock, the hull management section 120 controls the semi-submersible crane vessel 100 to a semi-submerged state when the hull moves to the sea, and when the hull arrives at the correct position of the semi-submersible crane vessel 100, the vessel may be floated to complete loading and move to the quay wall. The hull management section 120 may control the crane 200 of the semi-submersible crane vessel 100 to eliminate restrictions on the height of the crane boom and perform work without the risk of sinking the hull. The semi-submersible crane vessel 100 is a vessel that can be submerged up to 26.5 m with a ballast tank capacity and has a semi-submersible function. Moreover, the semi-submersible crane vessel 100 is designed to be able to load an accessory fleet when submerged to about 19.5 m.

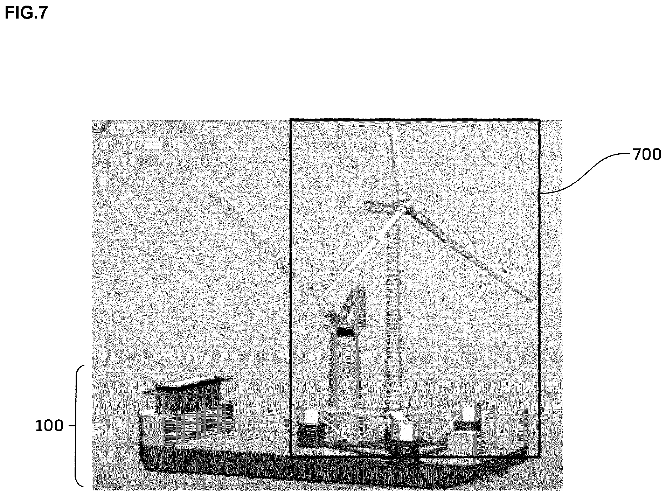

The wind power equipment pre-assembly section 130 may pre-assemble the wind power equipment on the hull while the semi-submersible crane vessel 100 is moored at the quay wall for a certain period of time. The wind power equipment may be at least one of a tower, a nacelle, a blade, and a cable, but is not necessarily limited thereto. In the related art, the hull is moored to the quay wall and a crane loading work is performed, but in the present disclosure, since the wind power equipment is assembled after the semi-submersible crane vessel 100 is moored to the quay wall, an engine including dynamic positioning (DP) function of the semi-submersible crane vessel 100 can be used to effectively control the movement due to external force (waves). In addition, since the vessel itself is moored to the quay wall, the work can be performed with the same effect as performing the crane loading work on land. Since the wind power equipment pre-assembly section 130 assembles the wind power equipment to the hull loaded on the semi-submersible crane vessel 100, the pre-assembled hull, that is, a floating wind turbine generator (FWTG), maintains the loaded state without being loaded separately on the semi-submersible crane vessel 100. Fig. 7 is a usage diagram illustrating the superstructure loaded onto the semi-submersible crane vessel according to one embodiment of the present disclosure. Referring to Fig. 7, it can be confirmed that the superstructure, which is the pre-assembled hull, that is, FWTG, is loaded on the semi-submersible crane vessel 10.

The offshore substation installation section 140 may install the offshore substation. The offshore substation installation section 140 may load the jacket manufactured on land (quay wall) onto the semi-submersible crane vessel 100. In this case, the semi-submersible crane vessel 100 has a special steel structure called a skid way, so that the offshore substation installation section 140 can load the jacket onto the semi-submersible crane vessel 100 by pulling the jacket over the skid way. The offshore substation installation section 140 can continuously adjust the ballast to match the height of the main deck of the semi-submersible crane vessel 100 when loading the jacket so that the height of the main deck is coincident with the quay wall. The offshore substation installation section 140 may move the semi-submersible crane vessel 100 on which the jacket is loaded to the installation area.

In addition, the offshore substation installation section 140 may semi-submerge the semi-submersible crane vessel 100 to float the jacket, and control the auxiliary anchor handling tug supply vessel (AHTS) 300 to move the jacket to the outboard side of the semi-submersible crane vessel 100. The offshore substation installation section 140 may control the crane 200 to lift the jacket that has been moved to the outboard side, and may adjust the air cock (diaphragm valve) from the bottom of the jacket and introduce ballast so that the jacket is upright. The offshore substation installation section 140 may control the crane 200 to fix the jacket to the installation location, lower the jacket to the seabed, and settle the jacket. The offshore substation installation section 140 may load the offshore substation on the special structure on the stern of the semi-submersible crane vessel 100, then move to the installation location, and install the offshore substation on the jacket.

The submarine cable construction section 150 may construct a submarine cable. The submarine cable construction section 150 may control the auxiliary anchor handling tug supply vessel (AHTS) 300 to move each submarine cable transport barge 400 carrying the submarine cable inner network Arrya and outer network Export to the waters near the site. Each submarine cable transport barge 400 may load about 5,000 tons of submarine cables. The submarine cable construction section 150 may load each submarine cable transport barge 400 on the semi-submersible crane vessel 100. The submarine cable construction section 150 may sequentially construct the submarine cable through a simultaneous lying and burying method using the Trenching Frame to a water depth of about 105 m.

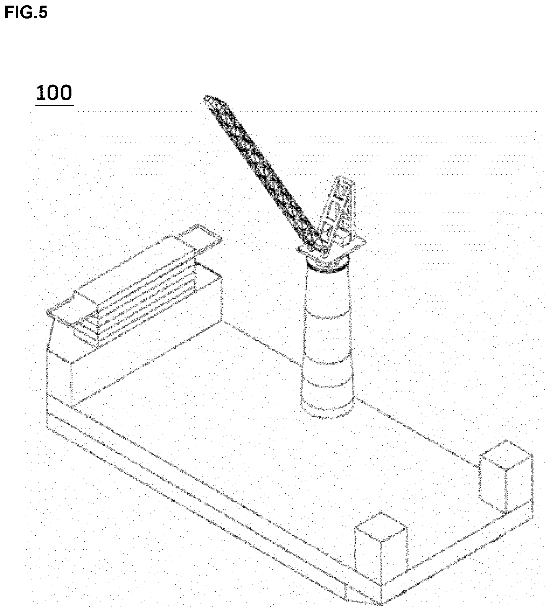

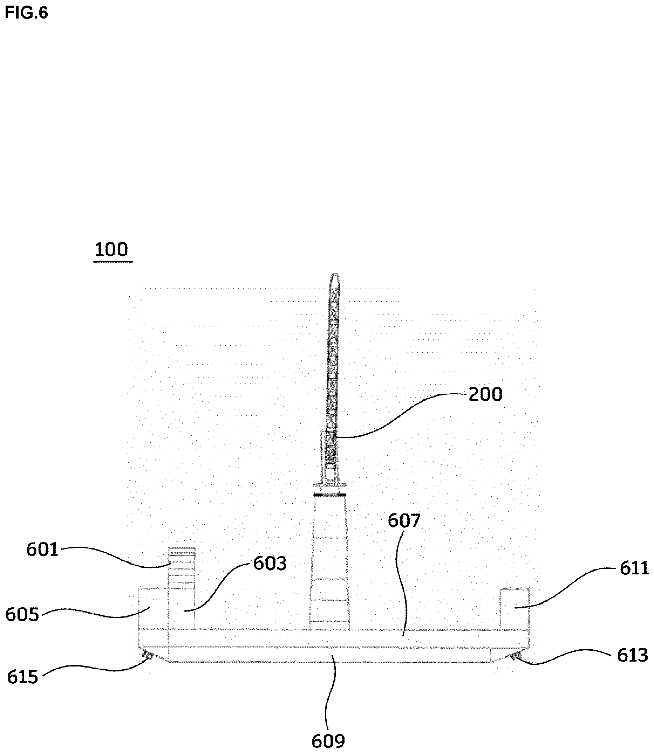

The auxiliary structure 160 refers to a structure forming the semi-submersible crane vessel 100, and the crane 200 is a structure installed on the semi-submersible crane vessel 100. Figs. 5 and 6 are perspective views and front views of the semi-submersible crane vessel 100 according to the embodiment of the present disclosure. Referring to Figs. 5 and 6, the auxiliary structure 160 includes a living area 601, a first bow buoyancy tank 603, a second bow buoyancy tank 605, a deck 607, a ship body 609, a stern buoyancy tank 611, a main propulsor 613, and a bow propulsor 615. The living area 601 may accommodate approximately 106 to 160 beds. The first bow buoyancy tank 603 may have a size of 12.5 m(L) x 78 m(B) x 19 m(H) and a volume of 18,525 m³. The second bow buoyancy tank 605 may have a size of 14.5 m(L) x 40 m(B) x 19 m(H) and a volume of 16,254.5 m³. The deck 607 may have a size of 173 m(L) x 78 m(B). The ship body 609 may have a size of 200 to 265 m(L) x 78 m(B) x 15.5(D). The stern buoyancy tank 611 may have a size of 13.5m(L)x13.5m(B)x19m(H) and a volume of 3,462.8 m³. The stern buoyancy tank 611 may be formed in two units, but is not necessarily limited thereto. The main propulsor (VSP, 613) may be 3,500kW x 4 sets. The bow propulsor (VSP, 615) may be 3,000kW x 2 sets. The crane 200 may be 4,000 tons with 120M boom length, but is not necessarily limited thereto.

The control section 170 may tow the pre-assembled hull from the quay wall to the site, and fix the anchor and the float by the mooring line. In the case of towing the offshore wind generator (FWTG) to the site using the conventional high-power anchor handling tug supply vessel (AHTS), since three anchor handling tug supply vessels (AHTSs) are used for towing, the three anchor handling tug supply vessels (AHTSs) should not move to another place and should maintain the position of the offshore wind generator in order to connect six mooring lines to the ship body. In the present disclosure, the semi-submersible crane vessel 100 has the advantage of not requiring additional work time for mooring lines because the semi-submersible crane vessel 100 is launched after connecting pre-installed anchor lines before launching the offshore wind generator when the offshore wind generator arrives at the site.

The present disclosure has been described with reference to the embodiments illustrated in the drawings, but the embodiments are merely exemplary, and those skilled in the art will understand that various modifications and other equivalent embodiments are possible from this. Therefore, the true technical protection scope of the present disclosure should be determined by the technical idea of the attached registration claims.

**[Detailed Description of Main Elements]**

| | | | |
|---|---|---|---|
| 10: | system for installing floating offshore wind generator using semi-submersible crane vessel | | |
| 100: | semi-submersible crane vessel | 110: | anchor management section |
| 120: | hull management section | 130: | wind power equipment pre-assembly |
| | section | | |
| 140: | offshore substation installation section | 150: | submarine cable installation section |
| 160: | auxiliary structure | 170: | control section |
| 200: | crane | 300: | auxiliary anchor handling tug supply vessel (AHTS) |
| 400: | submarine cable transport barge | | |

## Claims

1. A method for installing a floating offshore wind generator using a semi-submersible crane vessel, the method comprising:
loading an anchor, moving the semi-submersible crane vessel to a site, and installing the anchor at the site, by an anchor management section of the semi-submersible crane vessel;
loading a hull and mooring the semi-submersible crane vessel to a quay wall, by a hull management section of the semi-submersible crane vessel;
pre-assembling wind power equipment on the hull while the semi-submersible crane vessel is moored at the quay wall for a certain period of time, by a wind power equipment pre-assembly section of the semi-submersible crane vessel;
towing the hull whose pre-assembly is complete from the quay wall to the site, and fixing the anchor and the hull by a mooring line, by a control section of the semi-submersible crane vessel;
installing an offshore substation by an offshore substation installation section of the semi-submersible crane vessel; and
installing a submarine cable by a submarine cable installation section of the semi-submersible crane vessel.

2. The method of claim 1, wherein the installing of the offshore substation by the offshore substation installation section of the semi-submersible crane vessel further includes
loading a jacket manufactured on land onto the semi-submersible crane vessel, by the offshore substation installation section,
moving the semi-submersible crane vessel on which the jacket is loaded to an installation area, by the offshore substation installation section,
semi-submerging the semi-submersible crane vessel to float the jacket and controlling an auxiliary anchor handling tug supply vessel (AHTS) to move the jacket to an outboard side of the semi-submersible crane vessel, by the offshore substation installation section,
using a crane to fix the jacket at the installation location and lower the jacket to a seabed to settle the jacket, by the offshore substation installation section, and
loading the offshore substation onto a stern of the semi-submersible crane vessel and then moving the offshore substation to an installation location to install the offshore substation on the jacket, by the offshore substation installation section.

3. The method of claim 1, wherein the installing the submarine cable by the submarine cable installation section of the semi-submersible crane vessel includes
controlling the auxiliary anchor handling tug supply vessel (AHTS) to move a submarine cable transport barge loading a submarine cable inner network and outer network to a sea area near the site, by the submarine cable installation section,
loading each submarine cable transport barge onto the semi-submersible crane vessel, by the submarine cable installation section, and
sequentially installing the submarine cable using a simultaneous lying and burying method, by the submarine cable installation section.

4. The method of claim 1, wherein the hull is dried on land or in a dry dock.

5. The method of claim 1, wherein the wind power equipment is at least one of a tower, nacelle, blade, and cable.

6. A system for installing a floating offshore wind generator using a semi-submersible crane vessel, the system comprising:
a semi-submersible crane vessel of a barge type in which a crane is installed;
an auxiliary anchor handling tug supply vessel (AHTS) that tows a jacket and a submarine cable transport barge; and
a submarine cable transport barge that loads a submarine cable inner network and a submarine cable outer network, and is loaded on the semi-submersible crane vessel,
wherein the semi-submersible crane vessel includes
an anchor management section that moves after loading an anchor and installs the anchor at the site,
a hull management section that loads a hull and moors the semi-submersible crane vessel to a quay wall,
a wind power equipment pre-assembly section that pre-assembles wind power equipment on the hull,
a control section that tows the hull whose pre-assembly is complete from the quay wall to the site and fixes the anchor and the hull by a mooring line,
an offshore substation installation section that installs an offshore substation, and
a submarine cable installation section that installs a submarine cable.
